## Europäisches Patentamt

## European Patent Office

## Office européen des brevets

(19)

(11) Veröffentlichungsnummer: **0 022 982**
**B1**

(12) **EUROPÄISCHE PATENTSCHRIFT**

(45) Veröffentlichungstag der Patentschrift:
**12.01.83**

(21) Anmeldenummer: **80103903.3**

(22) Anmeldetag: **09.07.80**

(51) Int. Cl.³: **C 09 D 7/12,** C 08 F 220/18,
C 08 F 212/06, C 08 F 2/26 //
C09D5/04

(54) **Verdickungsmittel für physikalisch trocknende Beschichtungsstoffe und Verfahren zu dessen Herstellung.**

(30) Priorität: **23.07.79 DE 2929793**

(43) Veröffentlichungstag der Anmeldung:
**28.01.81 Patentblatt 81/4**

(45) Bekanntmachung des Hinweises auf die Patenterteilung:
**12.01.83 Patentblatt 83/2**

(84) Benannte Vertragsstaaten:
**AT BE DE FR IT NL SE**

(56) Entgegenhaltungen:
**AT-B-301 876**
**DE-A-2 438 868**
**DE-A-2 454 971**
**DE-A-2 833 468**
**GB-A-1 424 724**
**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Neubert, Gerhard, Dr., Panoramastrasse 11,
D-6719 Battenberg (DE)**
Erfinder: **Wistuba, Eckehardt, Dr., Im Obergarten 7,
D-6702 Bad Duerkheim 4 (DE)**

Verdickungsmittel für physikalisch trocknende Beschichtungsstoffe und Verfahren zu dessen Herstellung

Die vorliegende Erfindung betrifft ein Verdickungsmittel für physikalisch trocknende Anstrich- und Beschichtungsmittel, wobei das Verdickungsmittel ein in Testbenzin gelbildendes Copolymerisat ist, sowie ein Verfahren zur Herstellung dieses Verdickungsmittels.

Polymerisatbindemittel für lösungsmittelhaltige Beschichtungsstoffe auf der Basis von Poly(meth)acrylsäureestern und Copolymerisaten aus Vinylaromaten und (Meth)acrylsäureestern sind bekannt. Als Lösungsmittel gelangen im wesentlichen aliphatische Benzinkohlenwasserstoffe wie insbesondere Testbenzin zur Anwendung.

In derartige lösungsmittelhaltige, physikalisch trocknende Beschichtungsstoffe müssen vielfach Verdickungsmittel eingearbeitet werden, beispielsweise um dickere Beschichtungen in einem Arbeitsgang aufbringen zu können, um ein starkes Eindringen des Bindemittelanteils in saugende Untergründe, wie z.B. mineralische Baustoffe, oder das Absetzen der Pigmente zu verhindern. dabei sollen die Filmeigenschaften der Überzüge, wie z.B. Glanz, Verlauf, Haftfestigkeit und Witterungsbeständigkeit durch das Verdickungsmittel nicht nachteilig beeinflusst werden.

Als solche Verdickungsmittel werden oft anorganische voluminöse Stoffe verwendet, wie z.B. pyrogene Kieselsäure und Montmorillonit. Der Zusatz solcher Stoffe führt jedoch zu verhältnismässig matten Anstrichen und das Abwandern von Bindemittel in saugende Untergründe kann nicht wesentlich verringert werden.

Als organische Verdickungsmittel und Thixotropierungsmittel werden vielfach Derivate des hydrierten Rizinusöls eingesetzt. Die damit hergestellten Farben weisen jedoch die gleichen Nachteile auf. Überdies verändern so hergestellte Farben leicht in unkontrollierter Weise ihr Fliessverhalten. Diese Erscheinungen treten besonders während der Lagerung der Farben infolge von Temperaturschwankungen oder durch Kristallisation des Verdickungsmittels auf.

Eine Verdickung der Anstrichstoffe mit thioxotropen Lackbindemitteln, die nach bekannten Verfahren auf der Basis von Fettsäure modifizierten Kondensationsharzen und Amid- oder Urethangruppen enthaltenen Verbindungen erhalten werden, scheitert meist an der Unverträglichkeit der beiden Bindemittelklassen.

Aufgabe der vorliegenden Erfindung ist es, neue organische Verdickungsmittel aufzuzeigen, welche die oben erläuterten Eigenschaften in optimaler Weise in sich vereinen.

Gegenstand der vorliegenden Erfindung ist ein Verdickungsmittel für physikalisch trocknende Anstrich- und Beschichtungsstoffe auf Basis von in Testbenzin löslichen Bindemitteln, das dadurch gekennzeichnet ist, dass das Verdickungsmittel ein in Testbenzin gelbildendes Copolymerisat ist, das

a) 5–50 Gew.-% Acrylsäure- und/oder Methacrylsäureester von Monoalkanolen mit 8 bis 18 Kohlenstoffatomen

b) 0,01–2 Gew.-% mindestens einer mit a) copolymerisierbaren mehrfach olefinisch ungesättigten organischen Verbindung aus der Gruppe Acrylsäureester zweiwertiger 2 bis 6 Kohlenstoffatome, gegebenenfalls Äthergruppen enthaltender Alkohole, Vinyläther zweiwertiger Alkohole, Divinylbenzol, Divinylester von Dicarbonsäuren, Diallylester von Dicarbonsäuren, Triallylisocyanurat und/oder Reaktionsprodukte von Di- und Polyisocyanaten mit Hydroxyalkylacrylaten,

c) 0–60 Gew.-% Styrol und/oder Vinyltoluol

d) 0–80 Gew.-% eines oder mehrerer (Meth)acrylsäureester von 4 bis 7 Kohlenstoffatome enthaltenden Monoalkanolen und

e) 0–30 Gew.-% weiterer, unter a) bis d) nicht genannter copolymerisierbarer olefinisch ungesättigter organischer Verbindungen,

mit der Massgabe, dass die Summe der unter a) bis e) genannten Prozentzahlen 100 ist, einpolymerisiert enthält.

Gegenstand der vorliegenden Erfindung ist ausserdem ein Verfahren zur Herstellung dieser Verdickungsmittel.

Als in Testbenzin lösliche Bindemittel für physikalisch trocknende Anstrich- und Beschichtungsstoffe kommen insbesondere solche auf Basis von Polyacrylsäureestern, Polymethacrylsäureestern sowie Copolymerisaten aus Vinylaromaten und Acrylsäureestern und/oder Methacrylsäureestern in Frage.

Bevorzugt sind solche Verdickungsmittel, die bei Raumtemperatur blockfest sind und daher auch in lösungsmittelfreier Form hergestellt und gelagert werden können.

Die erfindungsgemässen Verdickungsmittel zeichnen sich dadurch aus, dass sie auch in sehr unpolaren Lösungsmitteln wie insbesondere Testbenzin in 2 bis 30%iger Konzentration homogene hochviskos fliessende bis feste Gele auszubilden vermögen. Diese Gele eignen sich hervorragend zur Verdickung und Regulierung des Fliessverhaltens von Beschichtungsstoffen auf der Basis von in Testbenzin löslichen Poly (meth) acrylaten und Copolymerisaten aus Vinylaromaten und (Meth) acrylsäureestern. Daneben können sie in besonderen Fällen auch als alleiniges Polymerisatbindemittel eingesetzt werden.

Die erfindungsgemässen Verdickungsmittel entwickeln ihre starke gelbildende Wirkung bereits in unpolaren Kohlenwasserstoffgemischen wie z.B. Testbenzin mit einem Aromatengehalt von 18% und weniger. Sie eignen sich daher besonders für die Anwendung in Beschichtungsstoffen mit umweltfreundlichen geruchsarmen Lösungsmittelgemischen. Ein weiterer Vorzug ist ihre gute Witterungs- und Vergilbungsbeständigkeit. Nach dem erfindungsgemässen Verfahren lassen sich Verdickungsmittel herstellen, die in Lösungsmitteln besonders schnell aufquellen und daher bereits nach wenigen Minuten Rühren im Lösungsmittelgemisch gebrauchsfertig sind.

Nach dem erfindungsgemässen Verfahren sind weiterhin sehr weiche und stippenfreie Gele herstellbar. Dies wirkt sich besonders auf die Qualität und das Aussehen der damit hergestellten Beschichtungsstoffe günstig aus. So können beispielsweise auch Beschichtungen mit ausgezeichnetem Verlauf und hohem Glanz hergestellt werden.

Das gewünschte Fliessverhalten der Beschichtungsstoffe lässt sich in einfacher Weise durch Änderung des Anteils der erfindungsgemässen Verdickungsmittel im gesamten Bindemittel der Beschichtung wie auch durch Auswahl und Menge der Pigmente und Füllstoffe leicht einstellen.

Es können so beispielsweise Beschichtungsstoffe hergestellt werden, die verschieden stark plastisches, pseudoplastisches thixotropes oder auch rheoplexes Fliessverhalten sowie Kombinationen dieser Erscheinungsformen aufweisen.

Die erfindungsgemäss hergestellten Verdickungsmittel ermöglichen daher die Herstellung von testbenzinhaltigen Beschichtungsstoffen, die sich durch hervorragende anwendungstechnische Eigenschaften auszeichnen, wie z.B. gute Spritzbarkeit, Rollbarkeit und Streichbarkeit, kein Pigmentabsetzen, kein bzw. vermindertes Ablaufen an senkrechten Flächen, kein oder nur geringes Abwandern des Bindemittels in saugende Untergründe, guter Verlauf und hoher Glanz in Deckanstrichen, stark plastisches Fliessverhalten bei Fassadenputzen und anderen dickschichtig aufzutragenden Beschichtungsstoffen.

Wird bei der Herstellung des Polymerisatbindemittels auf das erfindungsgemäss mitzuverwendende Comonomer b) verzichtet, so gehen die beschriebenen Vorteile des erfindungsgemässen Produkts verloren. Derartige Polymerisate mit vergleichbar hoher Viskosität in Lösung wirken bestenfalls viskositätserhöhend. Damit hergestellte Beschichtungsstoffe benötigen verhältnismässig hohe Anteile an Lösungsmitteln, neigen stark zum Fadenziehen und sind daher nach den üblichen Beschichtungsverfahren nicht oder nur schlecht verarbeitbar.

Zu den Aufbaukomponenten des erfindungsgemässen Verdickungsmittel ist im einzelnen folgendes auszuführen.

a) Als Acrylsäure- und/oder Methacrylsäureester von Monoalkanolen mit 8 bis 18 Kohlenstoffatomen kommen die lipophile Eigenschaften verleihenden (Meth)acrylsäureester in Frage, wie z.B. Äthylhexylacrylat, Isodecylacrylat, Laurylacrylat, Laurylmethacrylat. Besonders bevorzugt sind (Meth)acrylsäureester von 10 bis 14 Kohlenstoffatome enthaltenden Monoalkanolen. Die lipophilen (Meth)acrylsäureester a) sind in den erfindungsgemässen Verdickungsmitteln in einer Menge von 5 bis 50, vorzugsweise 10 bis 25 Gewichtsprozent einpolymerisiert.

b) Als mit a) copolymerisierbare mehrfach olefinisch ungesättigte organische Verbindungen eignen sich Acrylsäureester zweiwertiger 2 bis 6 Kohlenstoffatome enthaltender, gegebenenfalls Äthergruppen enthaltender Alkohole, beispielsweise (Oxa)alkandioldiacrylate, wie Äthylenglykoldiacrylat, Butandioldiacrylat, Hexandioldiacrylat, Polyäthylenglykoldiacrylate, wie Tetraäthylenglykoldiacrylat, Vinyläther zweiwertiger Alkohole, wie Butandioldivinyläther, Äthylenglykoldivinyläther, Divinylbenzol, Divinylester von Dicarbonsäuren, wie Divinylsebacinat, Diallylester von Dicarbonsäuren, wie Diallylphthalat, Diallylsebacinat und Diallylsuccinat, sowie Triallylisocyanurat und die Reaktionsprodukte von Di- und Polyisocyanaten mit Hydroxyalkylacrylaten.

Bevorzugt sind als Monomere b) difunktionelle $\alpha,\beta$-olefinisch ungesättigte Verbindungen, deren copolymerisierbare Doppelbindungen durch mehr als 4 Kohlenstoffe, Sauerstoffe- und/oder Stickstoffatome getrennt sind, wie z.B. Tetraäthylenglykolyoldiacrylat, Hexandioldiacrylat.

Monomere der Komponente b) sind im erfindungsgemässen Verdickungsmittel in einer Menge von 0,01 bis 2, vorzugsweise 0,05 bis 0,5 Gew.-% einpolymerisiert.

c) als Komponente c) eignen sich Styrol und Vinyltoluol, wobei Styrol bevorzugt ist. Komponente c) ist im erfindungsgemässen Copolymerisat in einer Menge von 0 bis 60, vorzugsweise 30 bis 50 Gew.-% einpolymerisiert.

d) Als Ester der Acrylsäure oder Methacrylsäure mit 4 bis 7 Kohlenstoffatome enthaltenden Monoalkanolen kommen z.B. Butylacrylat, Isobutylacrylat, tert.-Butylacrylat, Butylmethacrylat und Isobutylmethacrylat in Frage. Bevorzugt sind solche erfindungsgemässen Copolymerisate, die (Meth)acrylsäureester von Iso- und tert.-Butanol enthalten. Komponente d) ist im erfindungsgemässen Verdickungsmittel in Mengen von 0 bis 80, vorzugsweise 20 bis 50 Gew.-% einpolymerisiert.

e) Als weitere, unter a) bis d) nicht genannte copolymerisierbare olefinisch ungesättigte organische Verbindungen kommen in Frage:

Vinylester von 1 bis 4 Kohlenstoffatome enthaltenden Carbonsäuren, wie Vinylacetat, Vinylpropionat, Ester der Malein-, Fumar- oder Itaconsäure mit 1 bis 4 Kohlenstoffatome enthaltenden Alkanolen, wie Dibutylmaleinat, Dibutylfumarat, Dibutylitaconat. Alkylvinyläther mit 1 bis 8 Kohlenstoffatomen im Alkylrest, wie z.B. Vinylisobutyläther olefinisch ungesättigte Carbonsäuren mit 3 bis 5 Kohlenstoffatomen, wie Acrylsäure, Methacrylsäure, Crotonsäure,

Hydroxylgruppenhaltige copolymerisierbare olefinisch ungesättigte Verbindungen, wie die Acrylsäure- oder Methacrylsäuremonoester mehrwertiger Alkohole, wie Hydroxypropylacrylat, Butandiolmonoacrylat, $\alpha,\beta$-olefinisch ungesättigte, copolymerisierbare Nitrile, wie Acrylnitril, Meth-

acrylnitril, $\alpha,\beta$-olefinisch ungesättigte copolymerisierbare Amide, wie Acrylamid, Methacrylamid, sowie deren gegebenenfalls verätherte Methylolierungsprodukte, wie N-Methylolacrylamid, N-Methylolmethacrylamid, N-Butoxymethyl (meth) acrylamid und Ester der Acryl- und Methacrylsäure mit 1 bis 3 Kohlenstoffatome enthaltenden Monoalkanolen, wie Methyl-, Äthyl-, Propyl-, Isopropylacrylat, Methyl-, Äthyl-, Propylmethacrylat.

Beispiele für bevorzugt als Verdickungsmittel geeignete Copolymerisate sind in Testbenzin gelbildende Polymerisate aus 30 bis 55 Gew.-% Styrol, 25 bis 45 Gew.-% Isobutyl- oder tert.-Butyl-(meth)acrylat, 15 bis 25 Gew.-% Laurylacrylat und 0,1 bis 0,3 Gew.-% Hexandioldiacrylat.

Die Herstellung der erfindungsgemässen Copolymerisate kann nach bekannten Verfahren erfolgen. Bevorzugt eignet sich jedoch dafür die Emulsionspolymerisation.

Die Eigenschaften der erfindungsgemässen Verdickungsmittel sowie ihre Wirkung auf das Fliessverhalten der daraus hergestellten Lösungen oder Gele sowie der damit hergestellten Beschichtungsstoffe können durch Art und Konzentration der zur Polymerisation mitverwendeten Hilfsstoffe des Initiators, Reglers und Emulgators, durch die Reaktionsführung sowie insbesondere durch Art und Konzentration des Monomeren b) beeinflusst werden.

Die mehrfachfunktionell $\alpha,\beta$-olefinisch ungesättigten Verbindungen (b) liefern oberhalb einer Grenzkonzentration von über 2 Gew.-% unlösliche oder nur noch begrenzt quellbare Gele, während bei zu geringer Dosierung der Monomeren b) gelfreie viskose Lösungen entstehen, Produkte die für die Anwendung als Verdickungsmittel ungeeignet sind. Damit hergestellte Beschichtungsstoffe zeigen schlechten Verlauf, keinen Glanz und mehr oder weniger rauhe Oberflächen.

Als Polymerisationsinitiatoren werden im allgemeinen radikalliefernde Verbindungen beispielsweise 0,25 bis 2,5 Gew.-%, bevorzugt 0,4 bis 1,5 Gew.-% Kaliumperoxidisulfat eingesetzt.

Die üblicherweise zur Emulsionspolymerisation eingesetzten Emulgatoren wie z.B. Alkylsulfonate oder Alkylpolyäthylenoxidsulfate haben sich als nur wenig geeignet erwiesen. Mit den Alkalisalzen der höheren Fettsäuren und gegebenenfalls mit den Alkalisalzen der sulfierten Reaktionsprodukte aus Isooctylphenol und Äthylenoxid lassen sich dagegen besonders stippenfreie oder stippenarme Beschichtungsstoffe mit besonders hoher Thioxotropie und hohem Glanz herstellen.

Die den erfindungsgemässen Verdickern zugrunde liegenden Dispersionen werden z.B. mit 0,5 bis 5 Gew.-%, bevorzugt 1 bis 4 Gew.-% bezogen auf die Gesamtmenge der Monomeren, eines Alkalisalzes einer $C_8$–$C_{20}$-Carbonsäure, bevorzugt einer $C_{12}$ bis $C_{18}$-Carbonsäure wie zum Beispiel Kaliumstearat, Natriumstearat oder Kaliumlaurat, oder deren Gemische hergestellt. Der Einsatz der oben beschriebenen Emulgatoren bewirkt eine sehr gute Fällbarkeit der Dispersionen mit Säuren, Salzlösungen bzw. durch Kühlung unter 0 °C sowie die sehr gute Filtrierbarkeit der beim Fällprozess gebildeten Niederschläge. Mit Metallsalzen fällbare Verdickerdispersionen werden zweckmässigerweise mit den Alkalisalzen der sulfierten Kondensationsprodukte aus Isooctylphenol und 10 bis 35 Mol, bevorzugt 22 bis 28 Mol, Äthylenoxid, die in Konzentration von 0,5 bis 5 Gew.-%, bezogen auf Gesamtmenge der Monomeren eingesetzt werden, hergestellt.

Für die erfindungsgemässe Herstellung der Verdickungsmittel hat es sich als besonders vorteilhaft für die Homogenität der Gele erwiesen, die genannten Monomeren a) bis e) gemeinsam mit dem Emulgator vorzulegen und die Polymerisation durch Zulauf des Initiators durchzuführen.

Die Monomeren werden zweckmässigerweise zu 10 bis 65 Gew.-% bevorzugt 15 bis 35 Gew.-%, bezogen auf Gesamtdispersion in emulgatorhaltiges Wasser eingetragen und durch intensives Rühren unter Stickstoff emulgiert. Unter Stickstoff wird diese Emulsion auf 65 bis 95 °C, bevorzugt 75 bis 90 °C, erwärmt und innerhalb der Emulgatorzulaufzeit von 30 bis 240 Minuten, bevorzugt 30 bis 150 min, polymerisiert.

Das Copolymerisat kann beispielsweise isoliert werden, indem die Emulsion durch Kühlung oder durch Zugabe verdünnter Säuren, z.B. Essigsäure, Salzsäure oder in Wasser gelöster Salze, z.B. Aluminiumsulfat, Natriumsulfat, Calciumchlorid quartäre Ammoniumsalze gefällt und getrocknet wird. Weiterhin kann die Emulsion durch Sprühoder Wirbelbett-Trocknung zum Verdicker aufgearbeitet werden.

Die erfindungsgemässen Verdickungsmittel können auch als Alleinbindemittel verwendet werden. Vorzugsweise verwendet man sie jedoch in Kombination mit bekannten Polymerisatbindemitteln ähnlicher Monomerenzusammensetzung. Geeignete mit dem erfindungsgemässen Verdikkungsmittel zu kombinierende Polymerisatbindemittel sind z.B. Copolymerisate auf Basis von (Meth) acrylsäureestern bzw. Styrol und (Meth) acrylsäureestern die in Testbenzin (nach DIN 51 632) sowie in Aromaten wie Toluol, Xylol und Estern löslich sind.

Aus dem erfindungsgemässen Verdickungsmittel lassen sich, vorzugsweise in Kombination mit verträglichen weiteren Bindemitteln, durch Auflösen oder Aufquellen in den üblichen Lacklösungsmitteln wie z.B. Benzinkohlewasserstoffe, aromatische Kohlenwasserstoffe, Estern, Ketonen Lösungen oder Gele für verschiedenartige Beschichtungsstoffe und Klebstoffe herstellen.

Zur Herstellung solcher Beschichtungsstoffe können in bekannter Weise Pigmente, Füllstoffe metallische oder mineralische Körper sowie weitere Lackrohstoffe, wie z.B. Weichmacher, in die Lösung oder Gele eingearbeitet werden.

Eine bevorzugte Form dieser Anwendungen ist die Herstellung lösungsmittelhaltiger Fassadenfarben und Putze.

Die in den folgenden Beispielen angegebenen Teile und Prozente sind soweit nicht anders angegeben Gewichtsteile bzw. Gewichtsprozente:

## 1. Erfindungsgemässe Herstellung der Verdikkungsmittel

### Beispiel 1

In 41,73 Teilen dest. Wasser werden unter Rühren 0,47 Teile Kaliumstearat gelöst. Die Monomeren 5,24 Teile Styrol, 4,1 Teile tert. Butylacrylat, 2,34 Teile Laurylacrylat und 0,024 Teile Hexandioldiacrylat werden unter Stickstoff durch intensives Rühren dispergiert. Die Vorlage wird auf 80 °C aufgeheizt und bei dieser Temperatur innerhalb von 2,5 Stunden der Zulauf, bestehend aus 0,174 Teilen Kaliumperoxidisulfat und 6,94 Teilen dest. Wasser, zugegeben. Bei 85 °C werden 2 Stunden nachpolymerisiert. Festgehalt 19,6%.

10 Teile dieser Dispersion werden unter Rühren zu 10 Teilen dest. Wasser in denen 0,08 Teile konz. Essigsäure gelöst sind, gegeben. Der gebildete Niederschlag wird filtriert, mit 10 Teilen Wasser gewaschen und im Wirbelbett bei 45 °C getrocknet. Die Prüfergebnisse sind in Tabelle 1 zusammengefasst.

### Beispiel 2

4,032 Teile Styrol, 3,15 Teile tert.-Butylacrylat, 1,8 Teile Laurylacrylat, 0,018 Teile Hexandioldiacrylat und 0,36 Teile Kaliumstearat werden in 16,5 Teilen dest. Wasser mit Hifle eines Schnellrühres emulgiert und unter Stickstoff auf 75 °C aufgeheizt. Bei 35 °C Innentemperatur wird mit dem Zulauf, bestehend aus 0,113 Teilen Kaliumperoxidisulfat und 5,363 Teilen Wasser, begonnen und über 3 Stunden kontinuierlich fortgesetzt. Bei 79 bis 80 °C werden 2 Stunden nachpolymerisiert. Festgehalt: 29,3%.

500 Teile Dispersion werden durch Kühlung auf − 15 °C gefällt und 1 × mit 500 Teilen dest. Wasser gewaschen. Der Niederschlag wird bei 30 °C im Umlufttrockenschrank getrocknet. Die Prüfergebnisse sind in Tabelle 1 zusammengefasst.

### Beispiel 3

135 Teile Styrol, 105 Teile tert. Butylacrylat, 60 Teile Laurylacrylat und 0,6 Teile Tetraäthylenglykoldiacrylat werden in 1500 Teilen dest. Wasser, die 34,3 Teile eines 35%igen Emulgators enthalten, dessen Wirksubstanz das Natriumsalz des sulfierten Reaktionsproduktes aus Isooctylphenol und ca. 25 Mol Äthylenoxid ist, emulgiert und unter Stickstoff auf 75 °C erwärmt. Innerhalb von 3 Stunden werden 3,75 Teile Kaliumperoxidisulfat, gelöst in 178 Teilen dest. Wasser zugegeben. Bei 78 °C wird $2^{1}/_{4}$ Stunden nachpolymerisiert. Festgehalt: 19,3%.

Unter Rühren werden 750 Teile dieser Dispersion zu 1000 Teilen 5%iger Aluminiumsulfatlösung getropft. Der Niederschlag wird filtriert, mit 750 Teilen destilliertem Wasser gewaschen, und bei 30 °C getrocknet.

Die Prüfergebnisse sind in Tabelle 1 zusammengestellt.

## II. Vergleichsbeispiel:

A) 135 Teile Styrol, 105 Teile tert.-Butylacrylat und 60 Teile Laurylacrylat werden in 1052 Teilen dest. Wasser, die 30 Teile 40%iges Natriumsalz eines Paraffinsulfonates der mittleren Kettenlänge 15 C-Atomen enthalten, dispergiert und unter Stickstoff auf 80 °C erwärmt. Der Zulauf von 4,5 Teilen Kaliumperoxidisulfat in 178 Teilen dest. Wasser wird 2,5 Stunden zugetropft.

Nachpolymerisiert wird 2 Stunden bei 80 °C. Festgehalt 17,2%.

500 Teile Dispersion werden unter Rühren zu 500 Teilen dest. Wasser zugegeben, die 30 Teile 5%igen Aluminiumsulfat-Lösung enthalten. Der Niederschlag wird abfiltriert, mit 500 Teilen dest. Wasser gewaschen und bei 30 °C getrocknet. Die Prüfergebnisse sind in Tabelle 1 zusammengestellt.

### Beispiel 4
(Herstellung von Farben und Putzen)

Um die Wirksamkeit der erfindungsgemässen Copolymerisate nach Beispiel 1, 2 und 3 als Verdickungsmittel sowie das Verhalten des Copolymerisats des Vergleichsbeispiels A darzulegen, werden Farben und Putze nach den unten aufgeführten Rezepten hergestellt. Hierzu werden die Verdickungsmittel bzw. die Vergleichspolymerisate in Testbenzin (Aromatengehalt 18%) bei Raumtemperatur am Schnellrührer gerührt bis sich nach 5 bis 10 Minuten eine homogene Paste gebildet hat. Der Paste werden unter weiterem Rühren die übrigen Bestandteile der Rezepte zugesetzt. Als mit den Verdickungsmitteln verträgliche weitere Polymerisatlösung E wird ein nach bekannten Verfahren hergestelltes Lösungspolymerisat mit der Monomerenzusammensetzung des Beispiel 2 aber ohne Mitverwendung von Comonomer b) mit einem K-Wert von 35 eingesetzt. Zur Verbesserung des Glanzes werden die Deckfarben in bekannter Weise mit dem Pigment angerieben.

a) Deckfarbe:
133 Teile Verdickungsmittel, 15%ig in Testbenzin
145 Teile Polymerisatlösung E, 5%ig in Testbenzin
　40 Teile Rutil
Prüfergebnisse: siehe Tabelle 2

b) Fassadenfarbe:
100 Teile Verdickungsmittel aus Beispiel 2, 20%ig in Testbenzin
145 Teile Polymerisatlösung E, 55%ig in Testbenzin
　15 Teile Chlorparaffin, flüssig (50%ig Chlorgehalt)
　70 Teile Rutil
160 Teile Microcalcit
100 Teile Microtalkum
170 Teile Testbenzin

Kennwerte: Viskosität (180 sec.$^{-1}$):
　ca. 1300 mPa.s
　Fliessgrenze: 30 dyn/cm$^2$

Die Farbe lässt sich nach den üblichen Auftragsverfahren wie beispielsweise durch Streichen, Spritzen oder Rollen, gut verarbeiten. Sie zeichnet sich durch günstige Verarbeitungseigenschaften aus, wie z.B. kein Pigmentabsitzen, leichte Verstreichbarkeit, guten Verlauf und geringes Ablaufen an senkrechten Flächen.

c) Streichputz

200 Teile Verdickungsmittel aus Beispiel 2, 20%ig in Testbenzin

120 Teile Polymerisatlösung E, 50%ig in Testbenzin

60 Teile Rutil

600 Teile Calcit (0,001 bis 0,1 mm Durchmesser)

d) Splittputz

200 Teile Verdickungsmittel aus Beispiel 2, 20%ig in Testbenzin

110 Teile Polymerisatlösung E, 55%ig in Testbenzin

400 Teile feiner Splitt (0,5–2 mm Durchmesser)

400 Teile grober Splitt (3–5 mm Durchmesser)

100 Teile Microcalcit

Die Putze c) und d) zeichnen sich durch plastisches Fliessverhalten aus. Sie lassen sich leicht nach den üblichen Verarbeitungsverfahren, wie z.B. mit der Rolle oder Glättkelle, in dicker Schicht z.B. auf mineralischem Putz oder Mauerwerk auftragen, ohne an senkrechten Flächen abzulaufen oder abzufallen.

Tabelle 1: Kennwerte der Klarlacke

| | Beispiel | | | Vergleichsbeispiel |
|---|---|---|---|---|
| | 1 | 2 | 3 | A |
| k-Wert, (in Anlehnung an DIN 53 726 1%ig in Dimethylformamid | 65 | 57 | 60 | 60 |
| Aussehen | farbloses Pulver | | | farbloses Pulver |
| Blockfestigkeit bei 40 °C | gut | gut | mässig | mässig |
| 15%ig in Testbenzin (18% Aromaten) Viskosität Pa.s | 130 | 20 000 | 7 | <0,01 |
| Volumenanteil als Gel | 100% | 100% | 100% | 50% |
| Art des Gels | weich | weich | weich | hart |
| Volumenanteil dünnflüssiger Oberphase nach 24 h stehen bei 23 °C (%) | 0 | 0 | 0 | 50% |
| 7,5%ig in Testbenzin Viskosität (180 s$^{-1}$, Pa.s) | 400 | 5 | 10 | <5 |
| Volumenanteil als Gel | 100% | 5% | 0% | 0% |
| Art des Gels | sehr weich | weich | — | — |
| Stippen im Lackfilm je 1 cm$^2$ 5 μm Dicke | keine | keine | keine | viele grobe |

Kennwerte zu den Farben aus Beispiel 4a

| | Verdickungsmittel aus den Beispielen | | | Vergleichsbeispielen |
|---|---|---|---|---|
| | 1 | 2 | 3 | A |
| Viskosität (180 s$^{-1}$) in Pa.s | 1,5 | 2,2 | 1,0 | 2phasig |
| Fliessverhalten | plastisch | plastisch | schwach plastisch schwach thixotrop | — |
| Fliessgrenze (dyn/cm$^2$) | 5 | 25 | <2 | |
| Glanzgrad (Gardner 60 °): | 60% | 80% | 80% | |
| Fadenziehen beim Streichen | kein | kein | kein | |
| Volumengehalt dünnflüssige klare Oberphase nach 24 h Lagerung bei 23 °C | 0 | 0 | 0 | 50 |

## Patentansprüche

1. Verdickungsmittel für physikalisch trocknende Anstrich- und Beschichtungsstoffe auf Basis von in Testbenzin löslichen Bindemitteln, dadurch gekennzeichnet, dass das Verdickungsmittel ein in Testbenzin gelbindendes Copolymerisat ist, das

   a) 5–50 Gew.-% Acrylsäure- und/oder Methacrylsäureester von Monoalkanolen mit 8 bis 18 Kohlenstoffatomen

   b) 0,01–2 Gew.-% mindestens einer mit a) copolymerisierbaren mehrfach olefinisch ungesättigten organischen Verbindung aus der Gruppe Acrylsäureester zweiwertiger 2 bis 6 Kohlenstoffatome, gegebenenfalls Äthergruppen enthaltender Alkohole, Vinyläther zweiwertiger Alkohole, Divinylbenzol, Divinylester von Dicarbonsäuren, Diallylester von Dicarbonsäuren, Triallylisocyanurat und/oder Reaktionsprodukte von Di- und Polyisocyanaten mit Hydroxyalkylacrylaten,

   c) 0–60 Gew.-% Styrol und/oder Vinyltoluol,

   d) 0–80 Gew.-% eines oder mehrerer (Meth-)acrylsäureester von 4 bis 7 Kohlenstoffatome enthaltenden Monoalkanolen und

   e) 0–30 Gew.-% weiterer, unter a) bis d) nicht genannter copolymerisierbarer olefinisch ungesättigter organischer Verbindungen, mit der Massgabe, dass die Summe der unter a) bis e) genannten Prozentzahlen 100 ist, einpolymerisiert enthält.

2. Verfahren zur Herstellung des Verdickungsmittels durch Anspruch 1, dadurch gekennzeichnet, dass es durch Emulsionspolymerisation der 10 bis 65%igen Flotte hergestellt, ausgefällt und auf übliche Weise aufgearbeitet wird.

3. Verfahren zur Herstellung des Verdickungsmittels nach Anspruch 2, dadurch gekennzeichnet, dass als Emulgator 0,5 bis 5 Gew.-%, bezogen auf die Gesamtmenge der Monomeren a) bis e), eines Alkalisalzes einer Carbonsäure mit 8 bis 20 Kohlenstoffatomen und/oder eines Alkalisalzes eines sulfierten Reaktionsproduktes aus Isooctylphenol und 10 bis 35 Mol Äthylenoxid verwendet wird.

4. Verfahren nach Anspruch 2 oder 3, dadurch gekennzeichnet, dass die Monomeren a) bis e) zusammen mit dem Emulgator vorgelegt werden und bei 65 bis 95 °C die Initiatorlösung innerhalb von 0,5 bis 4 Stunden zugegeben wird.

## Revendications

1. Agent d'épaississement pour matière de revêtement et d'enduction séchant physiquement, à base de liants solubles dans de l'essence d'épreuve, caractérisé par le fait que l'agent d'épaississement est un copolymérisat, formant gel dans l'essence d'épreuve, qui contient, en polymérisation,

   a) 5–50% en poids d'esters acryliques et/ou méthacryliques de monoalcools à 8 à 18 atomes de carbone,

   b) 0,01–2% en poids d'au moins un composé organique, à multiple insaturation oléfinique, copolymérisable avec a) et appartenant au groupe des esters acryliques d'alcools bivalents à 2 à 6 atomes de carbone, contenant éventuellement des groupes éther, des ethers vinyliques d'alcools bivalents, du divinylbenzène, des esters divinyliques de diacides carboxyliques, d'esters diallyliques de diacides carboxyliques, des triallylisocyanurates et/ou des produits de réaction de di- et polyisocyanates avec les hydroxyalkylacrylates,

   c) 0–60% en poids de styrène et/ou vinyltoluène,

   d) 0–80% en poids d'un ou plusieurs esters (meth)-acryliques de monoalcools contenant 4 à 7 atomes de carbone, et

   e) 0–30% d'autres composés organiques à insaturation oléfinique, copolymérisables et non cités sous a) à d), sous réserve que la somme des pourcentages indiqués sous a) à e) soit égale à 100.

2. Procédé de préparation d'agent d'épaississement selon la revendication 1, caractérisé par le fait qu'il est préparé par polymérisation en émulsion du bain à 10 à 65% précipité et traité ensuite de manière usuelle.

3. Procédé de préparation d'agent d'épaississement selon la revendication 2, caractérisé par le fait qu'on utilise, comme émulsifiant, 0,5 à 5% en poids, rapporté à la quantité totale des monomères a) à e), d'un sel alcalin d'un acide carboxylique ayant 8 à 20 atomes de carbone et/ou d'un sel alcalin d'un produit de réaction sulfoné d'isooctylphénol et de 10 à 35 moles d'oxyde d'éthylène.

4. Procédé selon la revendication 2 ou 3, caractérisé par le fait que les monomères a) à e) sont introduits d'abord avec l'émulsifiant et, à 65 à 95 °C, la solution d'initiateur est ajoutée ensuite au cours de 0,5 à 4 heures.

## Claims

1. A thickener for physically drying paints and coating compositions which are based on binders which are soluble in mineral spirit, wherein the thickener is a copolymer which forms gels in mineral spirit and which contains, as copolymerized units,

   a) 5–50% by weight of esters of acrylic acid and/or of methacrylic acid with monoalkanols of 8 to 18 carbon atoms,

   b) 0.01–2% by weight of an olefinically polyunsaturated organic compound which is copolymerizable with a), from the group acrylic acid esters of dihydric alcohols of 2 to 6 carbon atoms, which may or may not contain ether groups, vinyl ethers of polyhydric alcohols, divinylbenzene, divinyl esters of dicarboxylic acids, diallyl esters of dicarboxylic acids, triallyl isocyanurate and/or reaction products of diisocyanates and polyisocyanates with hydroxyalkyl acrylates,

c) 0–60% by weight of styrene and/or vinyltoluene,

d) 0–80% by weight of one or more (meth)acrylic acid esters of monoalkanols of 4 to 7 carbon atoms and

e) 0–30% by weight of other copolymerizable olefinically unsaturated organic compounds not already listed under a) to d),

with the proviso that the sum of the percentages under a) to e) is 100.

2. A process for the preparation of a thickener as claimed in claim 1, wherein the thickener is prepared by polymerization in an emulsion of from 10 to 65% strength, and is then precipitated and worked up in a conventional manner.

3. A process as claimed in claim 2 for the preparation of a thickener, wherein the emulsifier used is from 0.5 to 5% by weight, based on the total amount of monomers a) to e), of an alkali metal salt of a carboxylic acid of 8 to 20 carbon atoms and/or of an alkali metal salt of a sulfonated adduct of isooctylphenol with from 10 to 35 moles of ethylene oxide.

4. A process as claimed in claim 2 or 3, wherein the reactor is initially charged with the monomers a) to e) together with the emulsifier and the initiator solution is added in the course of from 0.5 to 4 hours at 65–95 °C.